# FASCICULE DE BREVET EUROPEEN

(11) **EP 0 746 805 B1**
(45) Date de publication et mention de la délivrance du brevet: **29.07.1998**
(21) Numéro de dépôt: 95909819.5
(22) Date de dépôt: 13.02.1995
(51) Int. Cl.: G05D 7/06, B05B 13/04, B05C 17/005

(54) **DISPOSITIF DE DEPOSE D'UN MATERIAU FLUIDE, MANIPULATEUR CORRESPONDANT ET PROCEDE DE MISE EN OEUVRE DU DISPOSITIF**
VERFAHREN UND VORRICHTUNG MIT MANIPULATOR ZUR FLÜSSIGKEITSAUSGABE
DEVICE FOR DEPOSITING A FLUID MATERIAL, MANIPULATOR THEREFOR, AND METHOD FOR USING SAID DEVICE

(30) Priorité: 25.02.1994 FR 9402365
(43) Date de publication de la demande: 11.12.1996
(73) Titulaire: SEVA, société dite,, F-71100 Chalon-sur-Saône (FR)
(72) Inventeur: THOMAS, Dominique, F-71200 Le Creusot (FR)
(74) Mandataire: Puit, Thierry
(86) Numéro de dépôt international: FR9500166
(87) Numéro de publication internationale: WO9523365

(56) Documents cités:
- EP-A- 0 363 124
- EP-A- 0 403 280
- EP-A- 0 579 417
- WO-A-88/03059
- FR-A- 1 202 559
- US-A- 4 938 388
- US-A- 5 277 333

## Description

La présente invention est relative à la dépose d'un matériau fluide ou visqueux durcissable. Elle concerne en premier lieu un dispositif pour mesurer et réguler le débit d'un matériau fluide ou visqueux. Le dispositif comprend une ouverture d'alimentation en fluide d'une cavité délimitée par des parois. La cavité contient un moyen de contrôle du déplacement du matériau vers un orifice de sortie de la cavité.

La technique de régulation de débit de fluide est connue (voir par exemple les brevets français FR-A-1074 689 et FR-A-1 323 988). Ces dispositifs connus de mesure et de régulation d'un débit ne permettent pas la dépose sur pièce du matériau fluide durcissable. De plus ces dispositifs connus sont volumineux et lourds ce qui nuit à l'utilisation ou à l'embarquement par un manipulateur tel que humain ou robotisé, donc à la dépose du matériau suivant une courbe spatiale de forme complexe.

De plus il n'est pas possible de raccorder ces dispositifs connus, par exemple par un tuyau flexible, à une buse mobile de dépose, parce que les matériaux fluides durcissables sont souvent expansibles et compressifs sous l'action de la pression.

Dans cette situation le tuyau se dilate sous l'effet des variations de pressions, si bien que le débit enregistré par la pompe n'est plus représentatif du débit de la buse.

Selon la technique antérieure connue, la régulation du débit de matériau s'effectue par l'intermédiaire de la régulation de la pression, ce qui présente les inconvénients énumérés plus haut.

Le document EP-A-579 417 décrit une régulation de ce type, où la régulation de pression s'effectue à grande distance de la buse. Ainsi, les inconvénients mentionnés ne sont pas éliminés.

Le document WO 88/03 059 propose une régulation de pression par un capteur qui agit indirectement sur un piston, donc sur une aiguille qui est plus ou moins ouverte et qui admet plus ou moins de produit fluide. Comme la viscosité du produit n'est pas identique d'un fût à l'autre, qu'il y a des variations de température ambiante, et que le produit est traité à chaud, des réglages fréquents sont indispensables, y compris pour le suivi de la viscosité du produit. Il est alors difficile d'obtenir une bonne précision en poids de produit posé.

Le document US-A-5 277 333 est du même type, avec une régulation de pression, par mesure d'une pression amont et d'une pression aval, et interposition d'un régulateur.

Au contraire, selon la présente invention, le réglage s'effectue en volume puisqu'une pompe à engrenages est montée directement sur le pistolet. Cette solution permet de s'affranchir d'une pompe à engrenages située en amont qui soumettrait le produit aux éventuelles dilatations du tuyau d'alimentation, d'autant plus qu'il s'agit d'un produit compressible.

Ainsi, le débit est régulé en permanence, même quand la buse suit une courbe au lieu d'un tracé rectiligne. Ce dispositif permet également de supprimer le débitmètre pour le gaz présent notamment dans WO 88/03 059. Enfin, la compacité d'un tel dispositif est particulièrement avantageuse lors de son montage sur un robot.

L'invention a pour but de remédier à ces inconvénients. A cet effet, le dispositif selon l'invention présente un orifice de sortie qui débouche dans une buse de dépose solidaire des parois de la cavité.

Afin de réguler le débit de manière continue, le moyen d'entraînement est un engrenage dont l'axe de chaque pignon est sensiblement perpendiculaire à l'axe de l'orifice de sortie de la cavité.

Le moyen d'entraînement est actionné par un moteur, notamment électrique.

Le débit est proportionnel à la rotation de l'engrenage, donc à celle du moteur électrique dont la rotation contrôlée permet de mesurer le débit.

En vue d'obtenir un différentiel de pression voisin de zéro, donc une grande précision dans la régulation sans fuite interne du matériau, le dispositif comprend deux prises de pression dont une est en amont et l'autre en aval de la cavité.

La diminution de ces fuites internes augmente le rendement volumétrique et évite les échauffements pouvant être néfastes au matériau.

Dans le but de contenir la viscosité dans une plage étroite et de manipuler le matériau, les parois de la cavité sont chauffantes, par exemple au moyen de cartouches logées dans des perçages; on a ajouté une plaque chauffante au dispositif ou on a fixé un élément chauffant de positionnement de la buse, du moteur et/ou d'un manipulateur sur le dispositif selon l'invention.

La buse comprend un orifice d'extrusion comprenant à son extrémité un clapet de fermeture et d'ouverture pouvant être réglable, ce qui permet d'obtenir une cavité zéro c'est-à-dire sans matériau en contact avec l'extérieur qui risquerait de durcir et d'obturer la buse.

L'invention a également pour objet un manipulateur, notamment robot du type comprenant un corps mobile sur lequel est monté un bras articulé présentant à son extrémité un poignet tournant solidaire d'un pistolet de pose de fluide, ledit pistolet comprenant une ouverture d'alimentation en fluide d'une cavité délimitée par au moins une paroi, ladite cavité contenant un engrenage d'entraînement du fluide vers un orifice de sortie, dans lequel le pistolet est conforme au dispositif précité.

L'invention a encore pour objet un procédé pour déposer un matériau fluide ou visqueux durcissable, la dépose s'effectuant par l'écoulement du matériau dans une buse, caractérisé en ce que l'on chauffe le matériau puis l'on mesure et régule le débit de l'écoulement dudit matériau. Ceci permet de faire varier le débit de sortie du matériau en cours d'une même dépose; donc si le manipulateur ralentit on est capable d'ajuster le débit pour conserver le même poids linéaire de produit déposé.

Un exemple de mise en oeuvre de l'invention va maintenant être décrit en regard des dessins annexés sur lesquels :
- la Fig. 1 représente schématiquement, vue en perspective, une installation de dépose de matériau comprenant un dispositif et un manipulateur selon l'invention.

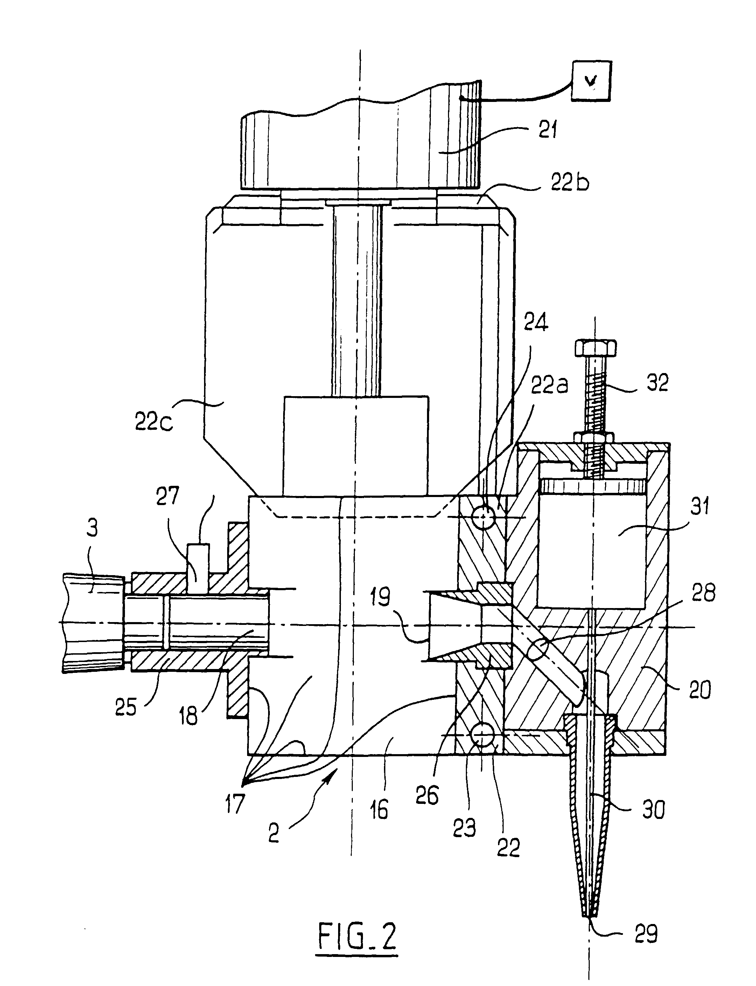

- La Fig. 2 représente, vue en coupe, le dispositif utilisé dans cette installation.
- La Fig. 3 est une vue en élévation partiellement arrachée, de la cavité du dispositif.

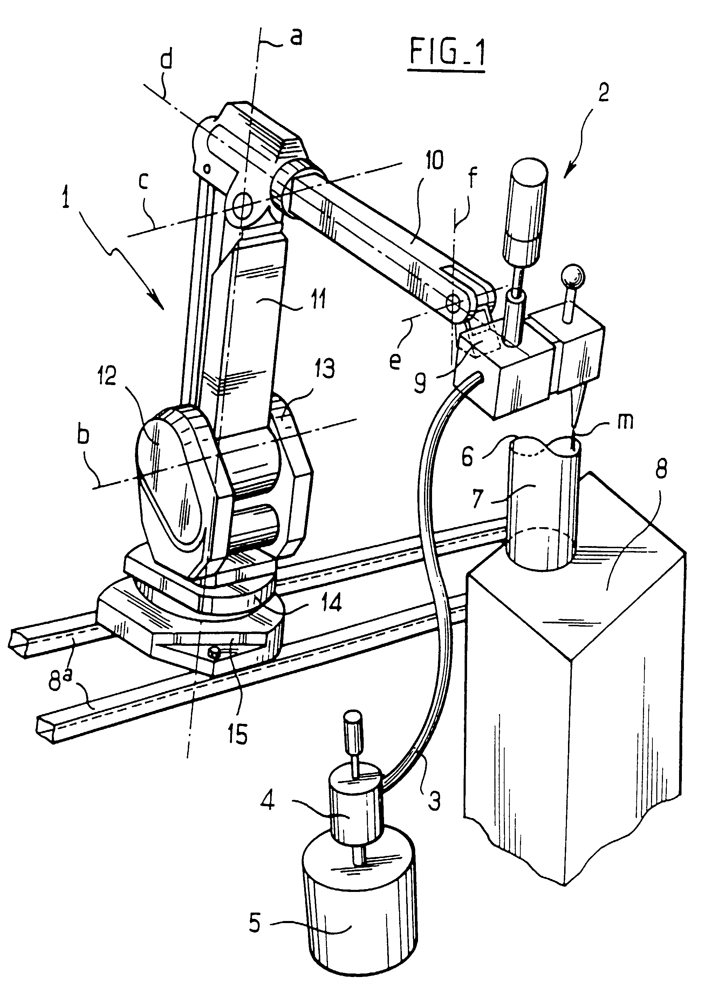

L'installation présentée à la Fig. 1 comporte un robot 1 manipulant un pistolet de dépose 2.

Le pistolet 2 est alimenté en matériau moussant m, via un conduit flexible 3, par une pompe à piston 4 disposée sur un fût 5 constituant un réservoir.

Le pistolet 2 dépose le matériau m sur la périphérie supérieure 6 d'un objet cylindrique 7 fixé sur une table 8.

Le robot 1 circule sur des glissières 8a.

Le robot 1 est muni d'un poignet 9 de fixation du pistolet 2, ledit poignet 9 constituant l'extrémité d'un bras 10 monté sur le corps 11 du robot 1. Le corps 11 est lui-même monté sur des flans 12, 13 fixés à un pied 14 tournant par rapport à une embase 15.

Le robot comprend six articulations d'axes a, b, c, d, e, f placées respectivement aux jonctions de l'embase 15 avec le pied 14, des flans 12, 13 avec le corps 11, du corps 11 avec le bras 10, sur le bras 10, à la jonction du bras 10 et du poignet 9 et sur le poignet 9. La combinaison de ces six articulations d'axes respectifs a, b, c, d, e, f permet n'importe quel positionnement du pistolet 2 dans l'espace.

Le pistolet 2 comprend un boîtier 16 délimité par six parois planes 17. Une paroi présente une ouverture d'alimentation 18 ; la paroi en vis-à-vis comporte un orifice de sortie 19 débouchant dans une buse 20. Un moteur électrique 21 commandé par un variateur électronique v est fixé sur une troisième paroi 17.

La buse 20 et le moteur 21 sont positionnés sur le boîtier 16 par l'intermédiaire d'un élément support chauffant 22 constitué de trois plaques 22a, 22b, 22c disposées perpendiculairement dans l'espace. Le chauffage des plaques est obtenu par deux cartouches thermorégulées 23, 24. Le flexible 3 d'amenée de matériau moussant m est fixé à l'ouverture d'alimentation 18 par une bride 25. Une canalisation 26 relie l'orifice de sortie 19 à la buse 20 à travers la plaque chauffante 22a. Deux prises de pression 27, 28 sont montées respectivement sur la bride 25 et la sortie de la canalisation 26 dans la buse 20. La buse 20 comprend un orifice d'extrusion 29 conique creux obturable par une tige 30 formant clapet et solidaire d'un vérin de manoeuvre pneumatique 31. Une vis 32 située à l'extrémité du vérin 31 opposée au clapet contrôle l'ouverture dudit clapet.

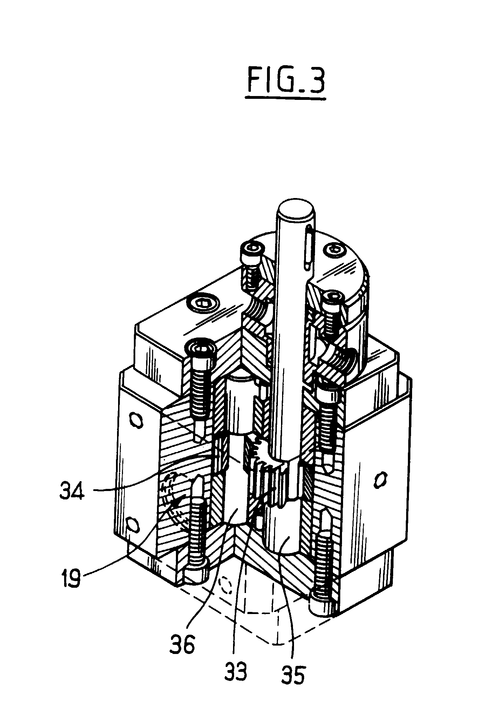

Le boîtier 16 contient un engrenage formé de deux pignons 33 et 34 qui apparaît sur la Fig. 3. Le pignon 33 est entraîné au moyen de l'arbre 35 de transmission du mouvement du moteur 21. Le deuxième pignon 34 est monté sur un arbre 36. Les arbres 35 et 36 parallèles entre eux sont montés perpendiculairement à l'orifice de sortie 19.

Le fonctionnement de l'installation est le suivant: le matériau moussant m est pompé dans le fût 5 par la pompe 4 qui alimente le pistolet mobile 2 par le conduit flexible 3.

Le robot 1 positionne et déplace l'orifice d'extrusion 29 solidaire du pistolet 2. La souplesse du conduit 3 permet l'alimentation du pistolet à des distances variables du fût 5.

Le produit est entraîné vers l'orifice de sortie 19 par la rotation des pignons 33, 34 de l'engrenage. Le pignon 34 est entraîné par le pignon 33 contrôlé en rotation par le moteur, donc le moteur contrôle le débit. Le robot donne l'autorisation de mise en route du moteur et d'ouverture de la buse quand il a amené le pistolet 2 en position de travail. A ce moment, le matériau moussant s'écoule à un débit régulé, ce qui permet d'obtenir la pose d'un cordon de matériau moussant répétitive. La pose s'effectue par le déplacement de la buse 20 par le robot 1 au-dessus de la zone à recouvrir. Le cycle se termine par la fermeture de la buse et l'arrêt simultané du moteur commandé par le robot. Puis ce dernier ramène le pistolet 2 à sa position d'attente.

L'utilisation d'un moteur électrique 21 muni de son variateur de commande v permet de faire varier le débit de matériau moussant m lors d'un cycle de dépose.

L'invention ne se limite pas à l'exemple décrit; en variante, le manipulateur peut être une glissière motorisée.

## Revendications

1. Dispositif pour mesurer et réguler le débit d'un matériau fluide ou visqueux, du type comportant un pistolet muni d'une cavité délimitée par au moins une paroi (17), cette cavité présentant une ouverture d'alimentation (18) en fluide et un orifice de sortie (19), débouchant dans une buse (20) de dépose solidaire de la ou des parois (17), et un moyen d'entraînement du matériau (m) vers la buse (20), caractérisé en ce que le moyen d'entraînement apte à réguler le débit de matériau (m) est un engrenage situé dans ladite cavité.

2. Dispositif suivant la revendication 1, caractérisé en ce que l'engrenage comprend des pignons (33, 34) d'axe sensiblement perpendiculaire à l'axe de l'orifice de sortie (19) de la cavité.

3. Dispositif suivant l'une des revendications 1 ou 2, dans lequel le moyen d'entraînement est actionné par un moteur (21), notamment électrique.

4. Dispositif suivant l'une quelconque des revendications 1 à 3, comprenant au moins deux prises de pression (27, 28) dont l'une est en amont et l'autre en aval de la cavité.

5. Dispositif suivant l'une des revendications 1 à 4, dans lequel la ou les parois (17) de la cavité sont chauffantes, par exemple au moyen de cartouches (23, 24) logées dans des perçages.

6. Dispositif selon l'une des revendications 1 à 4, auquel on a ajouté une plaque chauffante (22a).

7. Dispositif selon l'une des revendications 1 ou 4, sur lequel on a fixé un élément chauffant de positionnement (22) de la buse, du moteur et/ou d'un manipulateur.

8. Dispositif selon l'une quelconque des revendications 1 à 7, dans lequel la buse (20) comprend un orifice d'extrusion comprenant à son extrémité (29) un clapet réglable (30) d'ouverture et de fermeture.

9. Manipulateur, notamment robot (1), du type comprenant un corps mobile (11) sur lequel est monté un bras articulé (10) présentant à son extrémité un poignet tournant solidaire d'un pistolet (2) de pose de fluide (m), ledit pistolet (2) comprenant une ouverture d'alimentation (18) en fluide (m) d'une cavité délimitée par au moins une paroi (17), ladite cavité contenant un engrenage (33, 34) d'entraînement du fluide (m) vers un orifice de sortie (19), caractérisé en ce que le pistolet(2) est conforme au dispositif selon l'une des revendications 1 à 8.

10. Procédé pour déposer un matériau durcissable fluide ou visqueux au moyen d'un dispositif selon l'une quelconque des revendications 1 à 8, la dépose s'effectuant par l'écoulement du matériau (m) dans une buse (20), caractérisé en ce que l'on chauffe le matériau, puis l'on mesure et régule le débit de l'écoulement dudit matériau (m).

## Claims

1. Device for measuring and regulating the flow rate of a fluid or viscous material, of the type including a gun provided with a cavity delimited by at least one wall (17), this cavity having a fluid supply opening (18) and an outlet orifice (19) opening into a depositing nozzle (20) secured to the wall or walls (17), and a means for driving the material (m) towards the nozzle (20), characterized in that the drive means capable of regulating the flow rate of material (m) is a gearing situated in the said cavity.

2. Device according to Claim 1, characterized in that the gearing comprises pinions (33, 34) whose axis is substantially perpendicular to the axis of the outlet orifice (19) of the cavity.

3. Device according to one of Claims 1 or 2, in which the drive means is actuated by a motor (21), in particular an electric motor.

4. Device according to any one of Claims 1 to 3, comprising at least two pressure inlets (27, 28), of which one is upstream and the other downstream of the cavity.

5. Device according to one of Claims 1 to 4, in which the wall or walls (17) of the cavity are heating walls, for example by means of cartridges (23, 24) accommodated in bores.

6. Device according to one of Claims 1 to 4, to which a heating plate (22a) has been added.

7. Device according to one of Claims 1 to 4, on which a positioning heating element (22) for the nozzle, motor and/or a manipulator has been fixed.

8. Device according to any one of Claims 1 to 7, in which the nozzle (20) comprises an extrusion orifice comprising at its end (29) an adjustable opening and closing valve (30).

9. Manipulator, in particular robot (1), of the type comprising a movable body (11) on which is mounted an articulated arm (10) having at its end a turning wrist secured to a gun (2) for depositing fluid (m), the said gun (2) comprising an opening (18) for supplying fluid (m) to a cavity delimited by at least one wall (17), the said cavity containing a gearing (33, 34) for driving the fluid (m) towards an outlet orifice (19), characterized in that the gun (2) is in accordance with the device according to one of Claims 1 to 8.

10. Method for depositing a hardenable fluid or viscous material by means of a device according to any one of Claims 1 to 8, the depositing being effected by the outflow of the material (m) from a nozzle (20), characterized in that the material is heated, then the flow rate of the outflow of the said material (m) is measured and regulated.

## Patentansprüche

1. Vorrichtung zum Messen und Regeln des Durchflusses eines fluiden oder viskosen Materials, welche eine Pistole, die mit einem von mindestens einer Wand (17) begrenzten Hohlraum versehen ist, der eine Zuführungsöffnung (18) für das Fluid und eine Austrittsöffnung (19) besitzt, die in eine mit der Wand oder den Wänden (17) fest verbundene Auftragsdüse (20) mündet, und ein Mittel für die Förderung des Materials (m) zur Düse umfaßt, **dadurch gekennzeichnet, daß** das Fördermittel, welches in der Lage ist, den Durchfluß des Materials (m) zu regeln, ein in dem Hohlraum befindliches Zahnradgetriebe ist.

2. Vorrichtung nach Anspruch 1, **dadurch gekennzeichnet, daß** das Getriebe Zahnräder (33, 34) umfaßt, deren Achsen zu der Achse der Austrittsöffnung (19) des Hohlraums im wesentlichen senkrecht stehen.

3. Vorrichtung nach Anspruch 1 oder 2, worin das Fördermittel von einem Motor (21), insbesondere einem Elektromotor, angetrieben wird.

4. Vorrichtung nach einem der Ansprüche 1 bis 3, welche mindestens zwei Druckmeßstellen (27, 28) enthält, wobei sich die eine hinter und die andere vor dem Hohlraum befindet.

5. Vorrichtung nach einem der Ansprüche 1 bis 4, in welcher die Wand oder Wände (17) des Hohlraums beispielsweise mittels in Bohrungen untergebrachter Heizpatronen (23, 24) beheizbar ist/sind.

6. Vorrichtung nach einem der Ansprüche 1 bis 4, zu welcher eine beheizbare Platte (22a) hinzugefügt worden ist.

7. Vorrichtung nach Anspruch 1 oder 4, an welcher ein beheizbares Element (22) zum Anbringen der Düse, des Motors und/oder eines Manipulators befestigt ist.

8. Vorrichtung nach einem der Ansprüche 1 bis 7, in welcher die Düse (20) eine Extrudieröffnung (29) umfaßt, die am Ende ein regelbares Schließventil (30) enthält.

9. Manipulator, insbesondere ein Industrieroboter (1), welcher ein bewegliches Gehäuse (11) umfaßt, auf welchem ein Gelenkarm (10) angebracht ist, der am Ende ein Drehgelenk besitzt, mit welchem eine Pistole (2) zum Auftragen des Fluids (m) verbunden ist, die eine Zuführungsöffnung (18) für das Fluid (m) in einen Hohlraum enthält, der von mindestens einer Wand (17) begrenzt wird und ein Zahnradgetriebe (33, 34) zur Förderung des Fluids (m) zu einer Austrittsöffnung (19) enthält, **dadurch gekennzeichnet, daß** die Pistole (2) der Vorrichtung nach einem der Ansprüche 1 bis 8 entspricht.

10. Verfahren zum Auftragen eines aushärtbaren fluiden oder viskosen Materials mittels einer Vorrichtung nach einem der Ansprüche 1 bis 8, wobei das Auftragen durch Fließen des Materials (m) durch eine Düse (20) erfolgt, **dadurch gekennzeichnet, daß** das Material (m) erwärmt und anschließend sein Durchfluß gemessen und geregelt wird.
